# EUROPÄISCHE PATENTSCHRIFT

(11) **EP 2 967 768 B1**
(45) Veröffentlichungstag und Bekanntmachung des Hinweises auf die Patenterteilung: **21.07.2021**
(21) Anmeldenummer: 14723975.0
(22) Anmeldetag: 12.03.2014
(51) Int. Cl.: A61C 9/00, A61C 8/00

(54) **IMPLANTATANALOG UND ANALOGLAGERKÖRPER**
IMPLANT ANALOG AND ANALOG-SUPPORT
ANALOGUE D'IMPLANT ET SUPPORT D'ANALOGUE

(30) Priorität: 12.03.2013 DE 102013004175
(43) Veröffentlichungstag der Anmeldung: 20.01.2016
(73) Patentinhaber: Spindler, Bruno, 77728 Oppenau (DE)
(72) Erfinder: SPINDLER, Bruno, 77728 Oppenau (DE); GADAU, Curd, 63856 Bessenbach (DE)
(74) Vertreter: Thämer, Wolfgang
(86) Internationale Anmeldenummer: PCT/DE2014/000113
(87) Internationale Veröffentlichungsnummer: WO 2014/139498

(56) Entgegenhaltungen:
- WO-A1-82/00757
- DE-U1-202013 001 642
- US-A1- 2003 036 035
- US-A1- 2004 137 410
- US-A1- 2009 053 675
- Guido Walz: "Tonnenkörper", LEXIKON DER MATHEMATIK, 1 January 2017 (2017-01-01), XP055672597, Retrieved from the Internet: URL:https://www.spektrum.de/lexikon/mathem atik/tonnenkoerper/10366 [retrieved on 2020-03-02]

## Beschreibung

Die Erfindung betrifft ein Implantatanalog und einen Analoglagerkörper zur Aufnahme in einem Sägeschnittmodell zur Präparation eines prothetischen Zahnersatzes, wobei das implantatanalog im Analoglagerkörper einsteckbar ist.

In der zahnärztlichen Implantologie wird u.a. im Rahmen der Herstellung eines prothetischen Einzelzahnersatzes häufig ein enossaler Implantatkörper verwendet, der die Prothese trägt.

In diesem Fall wird der Implantatkörper, eine Art Schraubdübel, in einer künstlich im Patientenkiefer erzeugten Bohrung eingeschraubt. Der eingeschraubte Implantatkörper nimmt bei der fertigen Prothese einen Implantatspfosten auf. Letzterer wird beispielsweise verdrehsicher im Implantatkörper mit einer speziellen Schraube verschraubt. Auf den Implantatspfosten wird eine, die sichtbare Zahnkrone bildende Suprastruktur, z.B. durch Verkleben, aufgesetzt.

Zur Herstellung eines solchen Zahnersatzes wird eine Abformung der exakten Darstellung der Mundsituation gefertigt, die in einem realen Arbeitsmodell abgebildet wird. Dieses Arbeitsmodell ist z.B. ein Sägeschnittmodell. Es besteht aus einem Trägersockel mit einem darauf lösbar befestigen Zahnkranz, wobei dieser Zahnkranz die Position des künftigen Zahnersatzes enthält.

Der Herstellung eines Sägeschnittmodells ist u.a. aus dem Lehrbuch der Zahntechnik, Band 3, Auflage 5 bekannt. In dem vom Quintessenz Verlags GmbH Berlin 2012 herausgegebenen und von den Autoren A. Hohmann und W. Hielscher verfassten Lehrbuch wird auf den Seiten 132 und 133 das Pindex-Verfahren beschrieben. Danach wird eine sich noch im Abformträger befindende zähelastische Abformmasse mit Gips ausgegossen. An dem dabei entstehenden positiven Zahnkranzmodell wird die bisher unebene, später sockelseitige Zahnkranzbasis plangeschliffen. In die Planfläche der Zahnkranzbasis wird circa mittig unter jedem zu restaurierenden Zahn mindestens eine zylindrische Bohrung eingebracht. In diese wird ein Modellpin eingeklebt oder mittels Presssitz eingesteckt.

Auf jeden metallischen Modellpin, das ist pro späterem Zahnkranzabschnitt mindestens einer, wird eine z.B. aus einem Buntmetall gefertigte Einsteckhülse kraftschlüssig aufgesteckt. Der freie Rand der jeweiligen Einsteckhülse liegt dabei dicht an der planen Zahnkranzbasis an. Nun wird der Zahnkranz, an dem mindestens drei Einsteckhülsen auf Modellpins stecken, mit den Einsteckhülsen voraus, in den aus Gips gefertigten, gerade abbindenden Trägersockel eingesteckt. Der abbindende Gips umschließt die Einsteckhülsen.

Nach dem Aushärten des Trägersockels kann der Zahnkranz vom Trägersockel parallel zu den Mittellinien der Modellpins abgezogen werden. Abschließend werden die zu bearbeitenden Modellsegmente zurechtgesägt und wieder auf den Trägersockel zurückgesteckt. Die einzelnen Modellsegmente sind nun so positioniert, dass sie der originären Mundsituation entsprechen.

Bei dem Pindex-Verfahren sind die Modellpins und Einsteckhülsen jeweils senkrecht zur Kauebene, ausgerichtet.

Soll nun ein sägeschnittmodelleigenes Stumpfsegment für den oben genannten prothetischen Einzelzahnersatz gefertigt werden, muss in vorliegenden Fall, neben den Modellpins und Einsteckhülsen, ein spezielles Implantatanalog und ein komplimentärer Analoglagerkörper benutzt werden. Die Mittellinien des Implantatanalogs und des Analoglagerkörpers stehen zum einen nur selten senkrecht zur Kauebene. Zum anderen sind diese Implantatanaloge meistens länger als die maximale Höhe der regulären Zahnkranzmodelle der üblichen Sägeschnittmodelle. Auch sitzen sie in speziellen, vergrößerten Analoglagerkörpern. Da somit die Implantatanaloge und deren Analoglagerkörper aus den Zahnkranzmodellen regulärer Größe unten herausschauen, müssen höhere und/oder aufwendigere Sägeschnittmodelle bei der Integration implantatgelagerter Prothesen verwendet werden.

Die DE 20 2013 001642 U1 und die US 2003/036035 A1 beschreiben jeweils einen Analoglagerkörper und ein Implantatanalog. Letzteres kann mehrfach in den Analoglagerkörper eingesetzt und wieder herausgenommen werden.

Aus der WO 82/00757 A1 ist ein Sägeschnittmodell bekannt, bei dem ein Zahnkranz lösbar auf einem Trägersockel befestigt ist. Beidseits des zu präparierenden Zahns werden in den Zahnkranz Schlitze gesägt. Dadurch entsteht ein herausnehmbares Modellsegment. Um das Modellsegment innerhalb des Zahnkranzes an der richtigen Stelle positionieren zu können, weist das Modellsegment einen Positionierstift auf, der in die Unterseite des Modellsegments zentral befestigt ist. Zudem ist unterhalb des Modellsegments im Trägersockel eine Stiftaufnahme eingelassen, die der lösbaren verdrehsicheren Aufnahme des Positionierstifts dient.

Der vorliegenden Erfindung liegt die Problemstellung zugrunde, für ein Sägeschnittmodell ein Implantatanalog und ein Analoglagerkörper für den prothetischen Zahnersatz zu entwickeln, wobei beide Teile, bei einfacher Handhabung und zumindest bei teilweiser Wiederverwendbarkeit, der individuellen Stellung des Zahnersatzes gerecht werden und es zugleich ermöglichen, das entsprechende Sägeschnittmodell auf einfache Weise in konventionellen Artikulatoren zu verwenden.

Diese Problemstellung wird mit den Merkmalen des Patentanspruchs 1 gelöst. Dazu hat der Analoglagerkörper entweder eine tonnenförmige äußere Gestalt, deren Querschnitte bereichsweise elliptisch ausfallen oder in einer Längsschnittform mit großer Breite eine Tonnenkontur zeigt, an die sich ein rohrförmiger Abschnitt anschließt. Der Analoglagerkörper weist zur axialen Positionssicherung im Sägeschnittmodell Hintergriffe auf. Der Analoglagerkörper (70) hat zur Verdrehsicherung im Sägeschnittmodell um seine Mittellinie mindestens eine unrunde, elliptische Querschnittform. Der Analoglagerkörper hat eine Ausnehmung, die zumindest partiell Innenflächen zur formschlüssigen Anlage des Implantatanalogs aufweist, an denen das Implantatanalog verdrehsicher und in einer Längsrichtung wiederholgenau positionierbar ist. Der zumindest bereichsweise elastische Analoglagerkörper ist aus einem Werkstoff gefertigt, dessen Elastizitätsmodul zwischen 1000 und 5000 N/mm² liegt. Der Analoglagerkörper weist in der Ausnehmung mindestens ein erstes Rastelement auf. Das Implantatanalog hat zumindest partiell Außenflächen, mit denen es flächig an den Innenflächen des Analoglagerkörpers in Anlage bringbar ist. Außen am Implantatanalog ist mindestens ein zweites Rastelement angeordnet, das lösbar mit dem ersten Rastelement des Analoglagerkörpers verrastbar ist.

In der zwischen dem Analoglagerkörper und dem Implantatanalog gelegenen Montagefuge ist eine aus mindestens zwei gegeneinander verrastenden Elementen gebildete Rastverbindung zum formschlüssigen Ineinanderfügen der beiden beteiligten Teile angeordnet.

Mit der vorliegende Erfindung werden Bauteile zur Verfügung gestellt, die den Aufbau und die Handhabung eines Arbeitsmodells, das auch implantatgelagerten Zahnersatz aufnehmen kann, erleichtert. Hierzu ist das Implantatanalog über eine einkeilende Zentrierung sicher und wiederholgenau im Analoglagerkörper gelagert. Der Analoglagerkörper ist zudem aus einem elastischen Werkstoff, z.B. einem thermoplastischen und zumindest dunkelfarben eingefärbten Kunststoff gefertigt. Die das Implantatanalog aufnehmende Ausnehmung des Analoglagerkörpers ist so gestaltet, dass das metallische Implantatanalog nach Abschluss der Nutzung des Arbeitsmodells ohne Zerstörung oder Beschädigung des entsprechenden Modellstumpfes zur Wiederverwendung entnommen werden kann.

Weitere Einzelheiten der Erfindung ergeben sich aus den Unteransprüchen und der nachfolgenden Beschreibung schematisch dargestellter Ausführungsformen.
- Figur 1:: Teilquerschnitt eines Sägeschnittmodells;
- Figur 2:: Teilquerschnitt eines Unterkiefers mit einem in einem Implantat sitzenden Zahnersatz;
- Figur 3:: Längsschnitt durch ein Implantatanalog, Schnitt A-A;
- Figur 4:: Seitenansicht eines Implantatanalogs;
- Figur 5:: Draufsicht auf ein Implantatanalog nach den Figuren 3 und 4;
- Figur 6:: Unteransicht auf ein Implantatanalog nach den Figuren 3 und 4;
- Figur 7:: Draufsicht auf ein Implantatanalog mit drei Zentrierflanken;
- Figur 8:: Längsschnitt durch einen Analoglagerkörper, lange Breitseite, Schnitt A-A;
- Figur 9:: Längsschnitt durch den Analoglagerkörper nach Figur 8, jedoch kurze Breitseite, Schnitt B-B;
- Figur 10:: Draufsicht auf den Analoglagerkörper nach den Figuren 8 und 9;
- Figur 11:: Unteransicht auf den Analoglagerkörper nach den Figuren 8 und 9;
- Figur 12:: Unteransicht auf einen Analoglagerkörper mit vier Markierrippen;
- Figur 13:: perspektivische Ansicht des tonnenförmigen Analoglagerkörpers mit dargestellten unsichtbaren Kanten;
- Figur 14:: perspektivische Ansicht des Implantatanalogs mit dargestellten unsichtbaren Kanten;
- Figur 15:: perspektivische Ansicht eines Suprastrukturträgers mit dargestellten unsichtbaren Kanten;
- Figur 16:: Längsschnittausschnitt der zwischen dem Analoglagerkörper und dem Implantatanalog gelegenen Rastverbindung, Detail zu Figur 1;
- Figur 17:: perspektivische Ansicht der Kombination aus Analoglagerkörper und Implantatanalog, verkleinert.
- Figur 18:: Längsschnitt durch ein in einen Analoglagerkörper eingesetztes Implantatanalog mit einer Montagefuge, die elliptische Querschnitte hat;
- Figur 19:: Querschnitt zum ungeschnittenen Gegenstand nach Figur 18;
- Figur 20:: Längsschnitt wie in Figur 18, jedoch mit einem um 90 Winkelgrade gegenüber dem Längsschnitt nach Figur 18 gedrehten Gegenstand;
- Figur 21:: Querschnitt zum ungeschnittenen Gegenstand nach Figur 20;

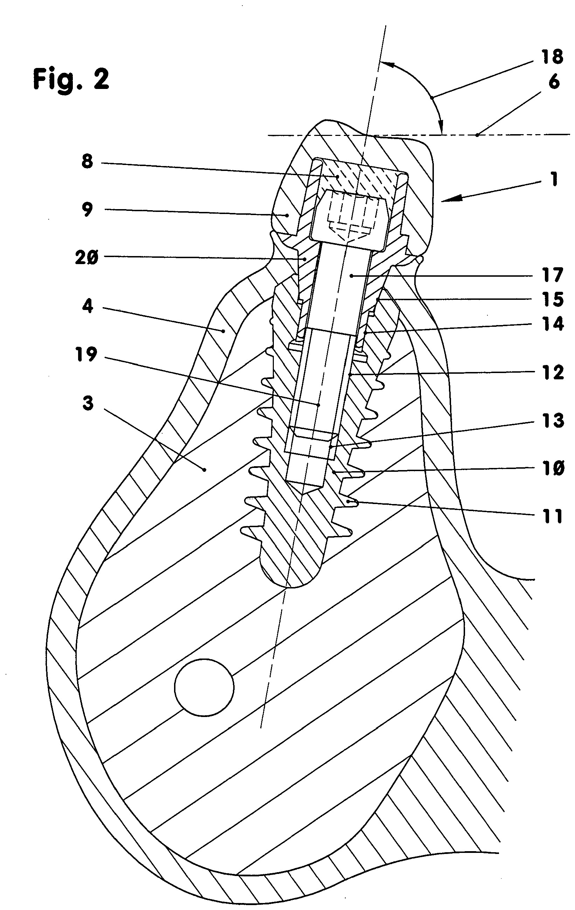

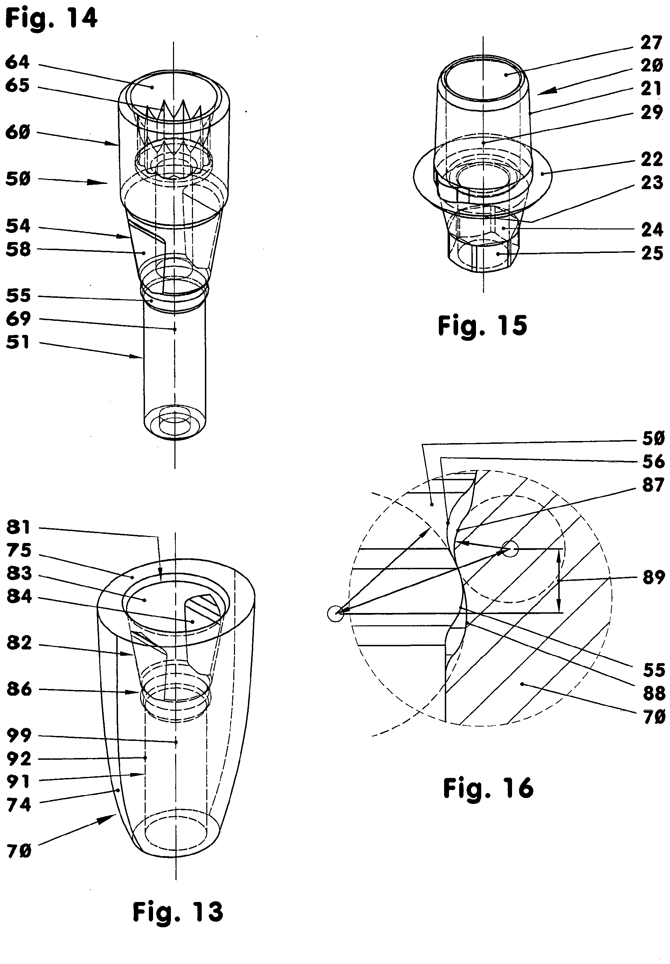

Die Figur 2 zeigt einen prothetischen Zahnersatz (1), der auf einem im Kieferknochen (3) eingeschraubten Implantatkörper (10) aufgebaut ist. Der gezeigte Kieferknochenschnitt liegt - vom Patient aus betrachtet - im Bereich der Backenzähne der rechten Kieferseite. Der Schnitt ist senkrecht zur Kauebene (6) orientiert. Im Implantatkörper (10), dessen Mittellinie (19) gegenüber der Kauebene (6) um einen Winkel (18) von z.B. 80 Winkelgraden geneigt ist, sitzt in einem Konussitz (15) ein z.B. gerader Suprastrukturträger (20), vgl. Figur 15. Der Suprastrukturträger (20) wird mit Hilfe einer speziellen Imbusschraube (17) in der Ausnehmung (12) des Implantatkörpers (10) gehalten. Auf dem Suprastrukturträger (20) ist als Suprastruktur eine künstliche Zahnkrone (9) aufgeklebt.

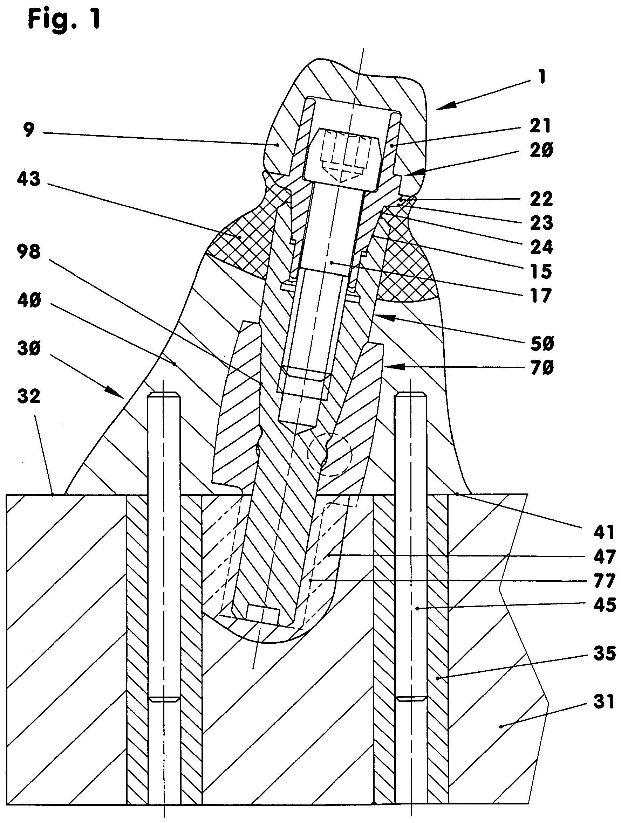

Die Figur 1 zeigt den zu der in Figur 2 dargestellten Mundsituation gehörenden Schnitt eines Arbeits- bzw. Sägeschnittmodells (30). An die Stelle des Kieferknochens (3) tritt hier ein auf einen Trägersockel (31) aufgesetzter Modellstumpf (40) als Teil eines Zahnkranzmodelles.

Der in der Regel planparallele, aus Gips gefertigte Trägersockel (31) ist die Basis, auf der das Zahnkranzmodell mit den zu bearbeitenden Modellstümpfen (40) während des Herstellungsprozesses des Zahnersatzes (1) temporär entsprechend der originären Mundsituation des Patienten lösbar aufgesteckt ist. Die beiden Trägersockel eines kompletten Gebissmodells werden u.a. zu Kontrollzwecken in einem hier nicht dargestellten Artikulator aufgenommen. Letzterer ist ein sogenanntes Gelenkgerät, das die Oberkieferbewegung relativ zum ortsfesten Unterkiefer simuliert.

Nach Figur 1 weist der Trägersockel (31) unterhalb des Modellstumpfes (40) z.B. zwei Einsteckhülsen (35) auf. Die Einsteckhülsen (35) sind z.B. rohrförmige Körper, die hier aus einem Buntmetall gefertigt sind. Sie sitzen fest im Trägersockel (31). Sie sind hierbei senkrecht zur Oberseite (32) des Trägersockels (31) ausgerichtet, der wiederum parallel zur Kauebene (6), vgl. Figur 2, angeordnet ist.

Auf der z.B. planen Oberseite (32) ist der Modellstumpf (40) mit seiner zumindest teilweise planen Unterseite (41) zumindest bereichsweise flächig aufgesetzt. Der Modellstumpf (40) ist z.B. ein aus einem aus Hartgips gefertigten Zahnkranzmodell herausgesägter Abschnitt. Die den Modellstumpf (40) begrenzenden Sägeschnitte verlaufen, bezogen auf Figur 1, vor und hinter dem hier gezeigten mittigen Zahnersatzlängsschnitt. Die Sägeschnitte sind hierbei um jeweils zumindest annähernd eine halbe Zahnbreite gegenüber dem gezeigten Zahnersatzlängsschnitt versetzt.

Im Modellstumpf (40) befinden sich beidseits des Analoglagerkörpers (70) ein Modellpin (45). Der metallische Modellpin (45) ist im Modellstumpf (40) fest verankert. Nach Figur 1 steckt jeder Modellpin (45) im Trägersockel (31) mittels Klemmsitz in der entsprechenden Einsteckhülse (35).

Das Implantatanalog (50) ist ein stiftartiges Bauteil, das beispielsweise aus dem rost- und säurebeständigen Stahl X8CrNiS18-9 gefertigt wird. Die äußere Gestalt des Implantatanalogs (50) teilt sich beispielsweise in drei Bereiche (51, 54, 61) auf. Der untere Bereich, dies ist der Führungsbereich (51), und der mittlere Bereich, es ist der Lagerbereich (54), stecken im Analoglagerkörper (70), vgl. Figur 1. Der obere Bereich ragt als Adapterbereich (60) aus dem Analoglagerkörper (70) heraus.

Der Führungsbereich (51) ist hier beispielsweise ein zylindrischer Stift. Er hat bei einem Durchmesser von ca. 2 mm eine Länge von 5,4 mm. An seinem freien Ende weist er - zum Erleichtern des Ausstoßens aus dem Analoglagerkörper (70) - z.B. eine 0,5 mm tiefe Einsenkung (52) auf, die einen Durchmesser von 1 mm hat. Das freie Ende ist angefast.

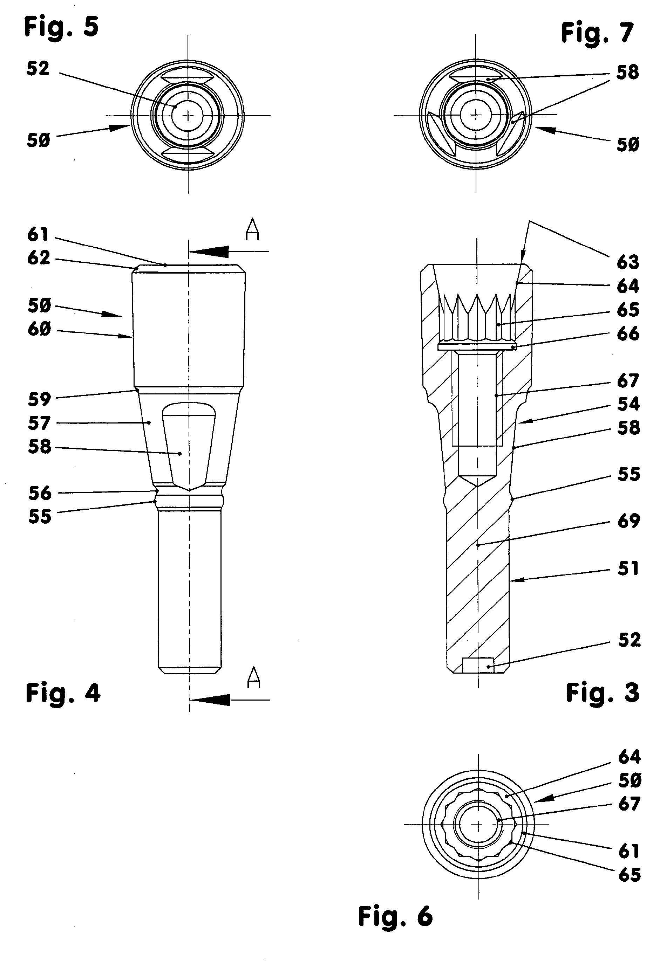

An den Führungsbereich (51) schließt sich der Lagerbereich (54) an. Er hat die Aufgabe, das Implantatanalog (50) verdrehsicher und wiederholgenau im Analoglagerkörper (70) zu fixieren. Er hat dazu u.a. einen Raststeg (55), einen Konus (57) und drei Zentrierflanken (58), vgl. Figur 7. Der Raststeg (55) ist ein quer zur Bauteilmittellinie (69) umlaufender, z.B. geschlossener Steg, dessen quer zur Mittellinie (69) gelegener maximaler Querschnitt kreisrund gestaltet ist. Der Durchmesser dieses Querschnitts ist z.B. um 0,35 mm größer als der Durchmesser des Führungsbereiches (51). Der ringförmige Raststeg (55) hat in einem Schnitt, der in der Ebene der Mittellinie (69) liegt, einen Konturradius von 0,36 mm. Nach Figur 4 geht der Raststeg (55) über eine Taille (56) in den Konus (57) über. Die Taille (56) hat in ihrem minimalen Querschnitt einen Durchmesser von 2,3 mm. Der Konus (57) hat bei einem Kegelwinkel von ca. 17 Winkelgraden und einer Länge von ca. 3 mm einen Maximaldurchmesser von 3,2 mm.

Die drei ebenen Zentrierflanken (58) sind mit einer Teilung von 120 Winkelgraden auf dem Konusumfang verteilt. Jede Zentrierflanke (58) schließt mit der Mittellinie (69) z.B. einen Winkel von 5 Winkelgraden ein. Die maximale Breite jeder Zentrierflanke (58) beträgt hier ca. 1,7 mm.

Nach den Figuren 3 und 4 besitzt das Implantatanalog (50) oberhalb des Konus (57) den kegelstumpfförmigen Adapterbereich (60). Außen hat der Adapterbereich (60), bei einer Länge von z.B. 4 mm, einen maximalen Durchmesser von 3,6 mm. Der Adapterbereich (60) hat einen Kegelwinkel von z.B. 2 bis 5 Winkelgraden. Zwischen dem Konus (57) und dem Adapterbereich (60) gibt es eine Ausrundung, deren Radius z.B. 2 mm beträgt.

Der Adapterbereich (60) weist in seinem Inneren eine mehrstufige Ausnehmung (63) auf. Die Mittellinien der einzelnen Stufen sind deckungsgleich zur Mittellinie (69) angeordnet. Die erste Stufe stellt als Verdrehsicherungszone einen Doppelinnensechskant (65) dar, der sich an einen von der Stirnfläche (61) des Implantatanalogs (50) ausgehenden Innenkonus (64) anschließt. Die Nutzlänge des Doppelinnensechskants beträgt z.B. 0,9 mm. Die Schüsselweite des Doppelinnensechskants misst 2,1 mm. Der Innenkonus (64), der einen engtolerierten Kegelwinkel von 22 Winkelgraden aufweist, dient der temporären Lagerung des Implantatanalogs (50), vgl. Figur 1.

Die zweite Stufe der Ausnehmung (63) ist eine mit einem M1,6-Gewinde ausgestattete Gewindebohrung (67). Die Länge des nutzbaren Gewindes beträgt z.B. 3,2 mm.

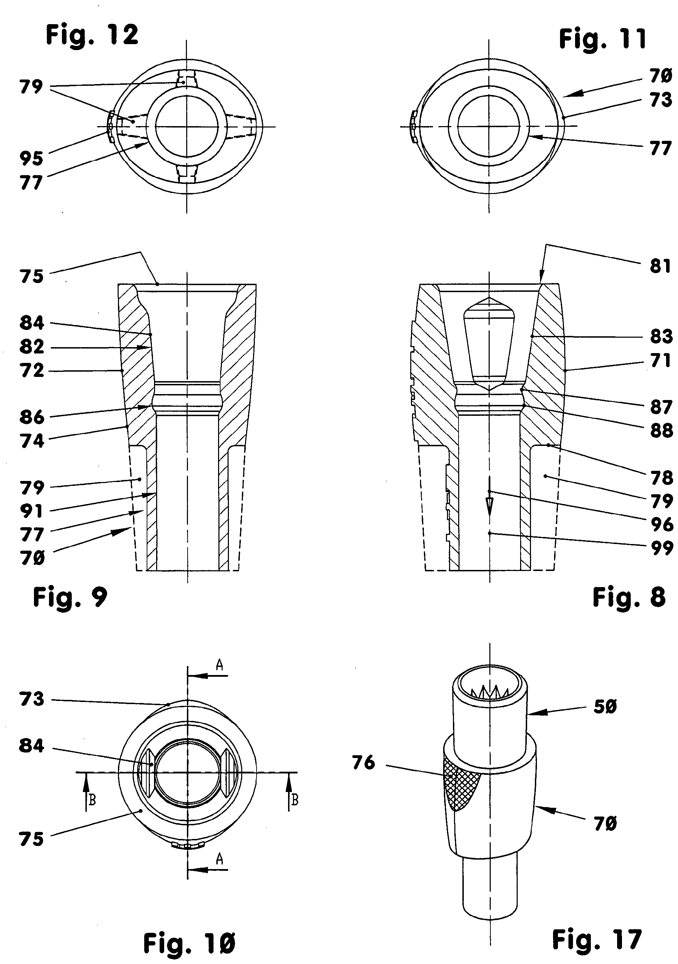

Der das Implantatanalog (50) aufnehmende Analoglagerkörper (70) ist nach den Figuren 8 bis 13 ein weitgehend hülsenförmiger Körper, der aus einem zähelastischen Thermoplast, z.B. Polyethylen (PE-HD) oder Polyoxymethylen (POM) hergestellt ist. Dieser Werkstoff ist beispielsweise dunkelblau eingefärbt.

Nach Figur 13 hat der Analoglagerkörper (70) z.B. eine im Wesentlichen tonnenförmige äußere Gestalt, dessen Querschnitte bereichsweise elliptisch ausfallen. Die äußere Oberfläche (74) des Analoglagerkörpers (70) ist strukturiert. In seinem Inneren weist er entlang seiner Mittellinie (99) eine z.B. durchgehende mehrstufige Ausnehmung (81) auf.

Der Analoglagerkörper (70) hat nach dem Ausführungsbeispiel aus Figur 8 einen maximalen elliptischen Querschnitt (73), der von der Stirnfläche (75) 2,9 mm entfernt ist. Dieser größte elliptische Querschnitt (73), vgl. Figur 10, hat z.B. die große Halbachse von 2,43 mm und eine kleine von 2,2 mm. Im Arbeitsmodell (30) liegen die großen Halbachsen quer zur Ausbreitung der durch den Zahnersatz zu füllenden Zahnlücke. Der in der Zeichnungsebene der Figur 8 dargestellte Längsschnitt des Analoglagerkörpers (70), vgl. Längsschnittform (71), zeigt eine Tonnenkontur, deren Radius z.B. 20,7 mm misst. Die Mittelpunkte der Radien beider Seiten liegen auf einer quer zur Mittellinie orientierten Geraden. Diese Gerade sollte - unabhängig von Figur 8 - die Mittellinie in einem Bereich schneiden, der, bezogen auf die Gesamtlänge des Analoglagerkörpers (70), von der Stirnfläche (75) mindestens 25% der Gesamtlänge, jedoch höchstens 50% der Gesamtlänge, entfernt ist.

Die obere Stirnfläche (74), die nach Figur 10 die Form eines Kreisringes hat, hat einen äußeren Radius von 2,2 mm. Dadurch ergibt sich auf beiden Seiten des Analoglagerkörpers (70) ein flächiger Hintergriff (76), wie er in Figur 17 als schraffierte Fläche dargestellt ist.

Bei dem Analoglagerkörper (70) nach Figur 13 fehlt dieser großflächige Hintergriff. Er wird hier ersetzt durch die in die Oberfläche (74) eingeprägte Struktur. Die Struktur, die in Figur 13 nicht dargestellt ist, hat eine Rauhheitsprofilhöhe von mindestens 0,04 mm, so dass die Summe der Oberflächenvertiefungen aufgrund der Struktur - beim Integrieren des Analoglagerkörpers (70) in das Gipsmodell - einen wirksamen Hintergriff ergeben. Als Struktur wird beispielsweise eine Noppen- oder Kreuzrillenstruktur vorgesehen.

Gemäß der Figuren 1, 2, 8, 9 und 17 ist der untere Bereich des Analoglagerkörpers (70) rohrförmig ausgebildet. Dort hat der Analoglagerkörper (70) einen Außendurchmesser von z.B. 2,6 mm. Dadurch entsteht gegenüber dem tonnenförmigen Bereich eine als Hintergriff (78) dienende Fläche. Beispielsweise ist diese Fläche plan. Die Länge des rohrförmigen Abschnitts (77) misst mindestens 44% der Gesamtlänge des Analoglagerkörpers (70).

Ggf. werden im Bereich des rohrförmigen Abschnitts (77) vier radial abstehende Markierrippen (79) angeordnet. Sie sind in den Figuren 8, 9 und 12 gestrichelt dargestellt. Diese Markierrippen (79) haben z.B. jeweils eine Breite von 0,5 mm.

Eine mehrstufige Ausnehmung (81) durchdringt zentral, entlang der Mittellinie (99), den Analoglagerkörper (70). Der erste Abschnitt der Ausnehmung (81) ist der Zentrierabschnitt (82). Er besteht aus einem geraden, ca. 3 mm langen Kegelstumpfmantel (83), in dem z.B. drei Zentrierflanken (84) angeordnet sind. Der Kegelwinkel des Kegelstumpfmantels (83), die Anzahl der Zentrierflächen (84) und die Neigung derselben gegenüber der Mittellinie (99) entsprechen den Werten, die aus der Beschreibung des Implantatanalogs (50) bekannt sind.

Der zweite Abschnitt der Ausnehmung (81) ist der Verrastungsabschnitt (86), vgl. auch Figur 16. Letzerer umfasst einen radial nach innen orientierten Ringsteg (87) und eine in Einschubrichtung (96) des Implantatanalogs (50) nachgeordnete Rastnut (88). Der größte Teil der Oberfläche des Ringstegs (87) ist Teil eines Torus, dessen Mittelliniendurchmesser z.B. 2,77 mm beträgt, während sein Ringquerschnitt - in einer Ebene gemessen, in der auch die Mittellinie (99) liegt - einen Ringquerschnittsradius von 0,34 mm misst. Die Rastnut (88) hat im Längsschnitt der Figuren 8 und 9 einen Nutradius von 0,8 mm. Ihr maximaler Durchmesser - quer zur Mittellinie (99) gemessen - misst z.B. 2,24 mm.

Beim Einstecken des relativ starren Implantatanalogs (50) in den zumindest im Bereich des Verrastungsabschnitts (86) elastischen Analoglagerkörper (70) gibt der sich radial aufdehnende Ringsteg (87) bzw. der Analoglagerkörper (70) elastisch nach, um dem Raststeg (55) die Passage zu ermöglichen. Nach dem Passieren des Raststegs (55) zieht sich der Ringsteg (87) bzw. der Analoglagerkörper (70) wieder zusammen, um seine ursprüngliche Gestalt einzunehmen.

Der Kreismittelpunkt des Rastnutradius ist vom Mittelpunkt des Ringquerschnittradius z.B. 0,57 mm entfernt. Der Höhenversatz (89) der Mittelpunkte beträgt ca. 0,2 mm. Durch diese geometrischen Größenverhältnisse und die gegenseitige Anordnung von Ringsteg (87) und Rastnut (88) liegt der Raststeg (55) des Implantatanalogs (50) nun so hinter dem Ringsteg (87) an, dass sich eine in Einschubrichtung (96) resultierende Kraft ergibt. Letztere zieht die Außenflächen (58) des Implantatanalogs (50) mit einer definierten Kraft gegen die Innenflächen (84) des Analoglagerkörpers (70).

Da der Nutradius des Analoglagerkörpers (70) mehr als doppelt so groß wie der Konturradius des Implantatanalogs (50) ist, kann der Konturradius - bei Ausschöpfung aller Fertigungstoleranzen - noch mindestens 0,5 Zehntel weiter in die Einschubrichtung (96) wandern, ohne erheblich an Klemmwirkung zu verlieren.

Der an den Verrastungsabschnitt (86) anschließende Führungsabschnitt (91) weist beispielsweise eine glatte zylindrische Bohrung (92) auf, in der z.B. der ebenfalls zylindrische Führungsbereich (51) des Implantatanalogs (50) zur Anlage kommt.

Sofern bei der verwendeten Ausführungsvariante eine mechanische Verrastung, wie in Figur 16 dargestellt, vorgesehen ist, führt die Bohrung (92) den Führungsbereich (51) mit geringem Spiel.

Die Klemmkraft der Presspassung ist so gewählt, dass das Implantatanalog (50) mit geringer Handkraft gegenüber dem Analoglagerkörper (70) einsteck- oder lösbar ist.

Das Implantatanalog (50) sitzt bei der Verwendung einer Verrastung so im Analoglagerkörper (70), dass die Außenflächen (58) die Innenflächen (84) großflächig kontaktieren. Beide Flächen (58) und (84), zumindest wenn drei Flächen pro Bauteil (50, 70) vorgesehen sind, haben die Funktion von Zentrierflanken, die die beiden Bauteile (50) und (70) in Längsrichtung (96) und bezüglich des Rotationfreiheitsgrades um die Mittellinien (69, 99) festlegen. Neben den Zentrierflanken (58, 84) kontaktieren sich zudem auch die Rast- und Ringstege (55, 87). Alle anderen zwischen der Ausnehmung (81) des Analoglagerkörpers (70) und dem Implantatanalog (70) gelegenen Flächen sind mit Spiel zueinander beabstandet, um jede Art von Mehrfachzentrierung und Überbestimmung zu vermeiden. Dichtungen und Abdichtbereiche sind hiervon ausgenommen.

In den Ausführungsbeispielen sind mit Ausnahme der Zentrierflanken (58, 84) alle Querschnitte der Montagefuge (98) kreisrund gestaltet. Selbstverständlich können die kreisrunden Querschnitte durch Querschnitte anderer Formen ersetzt werden, sofern zumindest ein Teil dieser Querschnitte die beiden beschriebenen Zentrierfunktionen einzeln oder getrennt übernimmt. Hierbei müssen die Zentrierflanken (58, 84) nicht eben sein. Auch können die Rast- und Ringstege (55, 87) durch Rastelemente nahezu beliebiger Gestalt ersetzt werden.

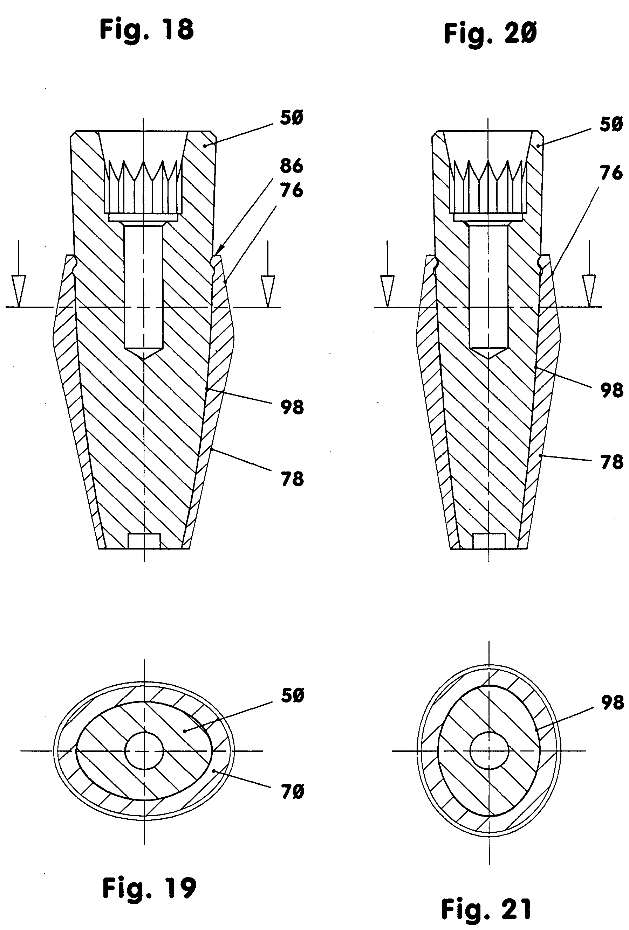

Die Figuren 18 bis 21 zeigen ein in einen Analogkörper (70) eingesetztes Implantatanalog (50), wobei die Konturen der Außenquerschnitte des Implantatanalogs (50) über die gesamte Höhe z.B. Ellipsen sind. In Figur 18 liegen alle großen Halbachsen der Ellipsen in der dargestellten Zeichnungsebene. Die großen Halbachsen sind um den Faktor 1,2 bis 1,5 größer als die kleinen Ellipsenhalbachsen. Im Ausführungsbeispiel beträgt der Faktor 1,33. Der Analogkörper (70) verfügt über elliptische Konturen seiner zentralen Ausnehmungsquerschnitte, die zu den korrespondierenden Konturen der Außenquerschnitte des Implantatanalogs (70) passen. Die Wandstärke des Analogkörpers (70) ist im unteren Bereich des oberen Drittels so groß gewählt, dass oberhalb des Querschnittmaximums die Außenwandung des Analogkörpers (70) einen oberen Hintergriff (76) und unterhalb des Querschnittmaximums einen unteren Hintergriff (78) ausbildet. Der Verrastungsabschnitt (86) hat im Längsschnitt eine zur Variante nach den Figuren 8 und 9 vergleichbare geometrische Formgestaltung. Ggf. trägt die Außenwandung des Analogkörpers (70) eine vertieft eingeprägte oder eine aus der Wandung herausragende bzw. überstehende Beschriftung.

Bei der Herstellung des Arbeitsmodells (30) nach Figur 1 steckt in dem unfertigen Zahnkranzmodell (40) bzw. seinem Modellstumpf die Kombination aus dem Implantatanalog (50) und dem Analoglagerkörper (70). Im Gegensatz zu dem beschriebenen Pindex-Verfahren ist hier der zahnkronennahe Bereich des Zahnkranzmodells (40), vor dem Ausgießen mit dem gipsartigen Zahnkranzmodellmaterial, mit einer nach dem Abbinden elastischen Zahnfleischmaske (43) im Bereich des prothetischen Zahnersatzes (1) teilbefüllt. Der Rest der sich in einem Löffel befindenden Abformmasse wird, zur Herstellung des Zahnkranzmodells (40), mit dem Modellgips ausgefüllt.

Zum Planschleifen der noch unebenen Basis des ausgehärteten Zahnkranzmodells (40) wird das Implantatanalog (50) aus dem Zahnkranzmodell (40) in Richtung Kauebene (6) - durch die elastische Zahnfleischmaske (43) hindurch - herausgezogen. Nun kann beim rückseitigen Gibsabtragen der Zahnkranzmodellwerkstoff im Bereich des z.B. blau eingefärbten Analoglagerkörpers (70) solange abgetragen werden, wie in der Fräs- bzw. Schleifebene der dünnwandige elliptisch oder runde Ringquerschnitt des weichen Analogkörperabschnitts (77) zu sehen ist. Sobald die Ringquerschnittsfläche des Analoglagerkörpers (70) sich sprunghaft vergrößert, muss das Planarbeiten der Basis beendet werden. Nur so lässt sich verhindern, dass entweder die klemmende Bohrung (92), die für den Erhalt der das Implantatanalog (50) fixierenden Klemmkraft sorgt, zu kurz wird oder dass die Verrastung (86) beschädigt wird.

In Figur 1 ist der Umriss des abgetragenen Analogkörperabschnitts (77) gestrichelt dargestellt.

Vor dem Aufsetzen des plangefrästen Zahnkranzmodells (40) auf die Oberseite (32) des noch nicht abgebundenen Trägersockels (31) wird das Implantatanalog (50) wieder in den Analoglagerkörper (70) eingesteckt. Beim Einsteckvorgang entsteht ein sattes Klack- oder ein anderes Einschnappgeräusch, wenn die Verrastung (86) die Zentrierflanken (58, 84) gegeneinander schlägt. Der über die neu geschaffene plane Unterseite (41) des Zahnkranzmodells (40) überstehende Führungsbereich (51) des Implantatanalogs (50) wird mit einem Tropfen Modellierwachs (47) abgedeckt. Dadurch wird das Entstehen eines Hintergriffes zwischen dem ggf. schräg ausgerichteten Implantatanalog (50) und der Unterseite (41) des Modellstumpfs (40) sicher verhindert.

Nach dem Aushärten des Trägersockels (31) wird das Modellierwachs (47) z.B. mittels Heißluft oder Heißdampf vom Trägersockel (31) entfernt. Nun kann bei montierten Modellpins (45) der zwischenzeitlich freigesägte Modellstumpf (40) zur Bearbeitung des Zahnersatzes (1) senkrecht vom Trägersockel (31) genommen werden.

Nach Figur 1 sitzt der Suprastrukturträger (20) mittels eines Implantatskonus (24) verdrehsicher und verschraubt im Konussitz (15) des Implantatanalogs (50). Der Implantatshals (23) und die Unterseite des Implantatstellers (22) liegen an der elastischen Zahnfleischmaske (43) an. Auf dem Implantatsteller (22) sitzt die künstliche Zahnkrone (9). Sie wird geführt vom Implantatspfosten (21), auf dem sie festzementiert oder angeklebt ist.

### Bezugszeichenliste:

- 1: Zahnersatz, prothetisch
- 3: Kieferknochen
- 4: Zahnfleisch, Schleimhaut
- 6: Kauebene
- 8: Zement, Klebstoff
- 9: Zahnkrone, künstlich, Suprakonstruktion

- 10: Implantatkörper
- 11: Außengewinde
- 12: Ausnehmung
- 13: Innengewindebohrung
- 14: Innendoppelsechskant
- 15: Konussitz
- 17: Imbusschraube
- 18: Implantatneigungswinkel
- 19: Mittellinie

- 20: Suprastrukturträger
- 21: Implantatspfosten
- 22: Implantatsteller
- 23: Implantatshals
- 24: Implantatskonus
- 25: Verdrehsicherung, Außensechskant
- 27: Stufenbohrung
- 29: Mittellinie

- 30: Sägeschnittmodell, Arbeitsmodell
- 31: Trägersockel
- 32: Oberseite
- 35: Einsteckhülse
- 40: Modellstumpf, Zahnkranzmodell
- 41: Unterseite
- 43: Zahnfleischmaske, elastisch
- 45: Modellpin
- 47: Modellierwachs

- 50: Implantatanalog
- 51: Führungsbereich
- 52: Einsenkung
- 54: Lagerbereich
- 55: Raststeg, zweites Rastelement
- 56: Taille
- 57: Konus
- 58: Außenflächen, Zentrierflanken
- 59: Fase

- 60: Adapterbereich
- 61: Stirnfläche
- 62: Stirnfase
- 63: Ausnehmung, mehrstufig
- 64: Innenkonus
- 65: Doppelinnensechskant, Verdrehsicherungszone
- 66: Hintergriff
- 67: Gewindebohrung; Innengewinde M1,6
- 69: Mittellinie, Bauteilmittellinie

- 70: Analoglagerkörper
- 71: Längsschnittform, große Breite
- 72: Längsschnittform, kleine Breite
- 73: Querschnittsform, unrund
- 74: Oberfläche, radial außen
- 75: Stirnfläche, oben (zur Krone hin orientiert)
- 76: Hintergriffe
- 77: Abschnitt, rohrförmig
- 78: Hintergriff, Planfläche
- 79: Markierrippen

- 81: Ausnehmung, mehrstufig
- 82: Zentrierabschnitt
- 83: Kegelstumpfmantel
- 84: Innenflächen, Zentrierflanken

- 86: Verrastungsabschnitt
- 87: Ringsteg, erstes Rastelement
- 88: Rastnut
- 89: Höhenversatz

- 91: Führungsabschnitt
- 92: zylindrische Bohrung, Radialsitzfläche
- 95: Beschriftung, vorstehende Zeichen
- 96: Längsrichtung, Einschubrichtung
- 98: Montagefuge
- 99: Mittellinie

## Patentansprüche

1. Implantatanalog (50) und Analoglagerkörper (70) zur Aufnahme in einem Sägeschnittmodell (30) zur Präparation eines prothetischen Zahnersatzes (1), wobei das Implantatanalog (50) im Analoglagerkörper (70) einsteckbar ist,
- wobei der Analoglagerkörper (70) entweder eine tonnenförmige äußere Gestalt hat, dessen Querschnitte bereichsweise elliptisch ausfallen oder in einer Längsschnittform (71) mit großer Breite eine Tonnenkontur zeigt, an die sich ein rohrförmiger Abschnitt (77) anschließt,
- wobei der Analoglagerkörper (70) zur axialen Positionssicherung im Sägeschnittmodell (30) Hintergriffe (76, 78) aufweist,
- wobei der Analoglagerkörper (70) zur Verdrehsicherung im Sägeschnittmodell (30) um seine Mittellinie (99) mindestens eine unrunde, elliptische Querschnittsform (73) aufweist,
- wobei der Analoglagerkörper (70) eine Ausnehmung (81) hat, die zumindest partiell Innenflächen (84) zur formschlüssigen Anlage des Implantatanalogs (50) aufweist, an denen das Implantatanalog (50) verdrehsicher und in einer Längsrichtung (96) wiederholgenau positionierbar ist,
- wobei der zumindest bereichsweise elastische Analoglagerkörper (70) aus einem Werkstoff gefertigt ist, dessen Elastizitätsmodul zwischen 1000 und 5000 N/mm² liegt,
- wobei der Analoglagerkörper (70) in der Ausnehmung (81) mindestens ein erstes Rastelement (87) aufweist,
- wobei das Implantatanalog (50) zumindest partiell Außenflächen (58) aufweist, mit denen es flächig an den Innenflächen (84) des Analoglagerkörpers (70) in Anlage bringbar ist und
- wobei außen am Implantatanalog (50) mindestens ein zweites Rastelement (55) angeordnet ist, das lösbar mit dem ersten Rastelement (87) des Analoglagerkörpers (70) verrastbar ist.

2. Implantatanalog und Analoglagerkörper nach mindestens einem der vorangegangenen Ansprüche, **dadurch gekennzeichnet, dass** die Ausnehmung (81) zentral und durchgehend gestaltet ist.

3. Implantatanalog und Analoglagerkörper nach mindestens einem der vorangegangenen Ansprüche, **dadurch gekennzeichnet, dass** die einzelnen Innenflächen (84) als plane Zentrierflanken gegenüber der Mittellinie (99) des Analoglagerkörpers (70) jeweils einen Keilwinkel von 3 bis 7 Winkelgraden einschließen.

4. Implantatanalog und Analoglagerkörper nach mindestens einem der vorangegangenen Ansprüche, **dadurch gekennzeichnet, dass** der Analoglagerkörper (70) drei Innenflächen (84) aufweist, die äquidistant in Umfangsrichtung geteilt angeordnet sind.

5. Implantatanalog und Analoglagerkörper nach mindestens einem der vorangegangenen Ansprüche, **dadurch gekennzeichnet, dass** das erste Rastelement (87) im mittleren Bereich der Ausnehmung (81) des Analoglagerkörpers (70) angeordnet ist.

6. Implantatanalog und Analoglagerkörper nach mindestens einem der vorangegangenen Ansprüche, **dadurch gekennzeichnet, dass** der Analoglagerkörper (70) ab 0,5 mm unterhalb des ersten Rastelements (87) seinen Querschnitt auf einer Länge von weniger als einem zehntel seiner Gesamtlänge um mehr als 50% verringert und/oder dort Markierrippen (79) aufweist.

7. Implantatanalog und Analoglagerkörper nach mindestens einem der vorangegangenen Ansprüche, **dadurch gekennzeichnet, dass** zumindest die radiale äußere Oberfläche (74) eine Struktur aufweist.

8. Implantatanalog und Analoglagerkörper nach mindestens einem der vorangegangenen Ansprüche, **dadurch gekennzeichnet, dass** das im Analoglagerkörper (70) eingesetzte Implantatanalog (50) mit dem zweiten Rastelement (55) am ersten Rastelement (87), unter Erzeugen eines axialen Zuges in Längsrichtung (96), durch den die Außenflächen (58) des Implantatanalogs (50) an den Innenflächen (84) des Analoglagerkörpers (70) zur Anlage kommen, spielfrei mit einer Spannreserve verrastet ist.

9. Implantatanalog und Analoglagerkörper nach mindestens einem der vorangegangenen Ansprüche, **dadurch gekennzeichnet, dass** das Implantatanalog (50) aus einem rost- und säurebeständigen Chrom-Nickel-Stahl gefertigt ist, der einen Schwefelanteil von mindestens 0,15% hat.

## Claims

1. Implant analogue (50) and analogue bearing body (70) for receiving in a saw-cut model (30) for preparation of a dental prosthesis (1), wherein the implant analogue (50) can be inserted in the analogue bearing body (70),
- wherein the analogue bearing body (70) either has a barrel-shaped external structure, regions of the cross sections of which are elliptical in design, or has a barrel contour in a wider longitudinal sectional shape (71) which is adjoined by a tubular section (77),
- wherein the analogue bearing body (70) has rearward grips (76, 78) for securing its axial position in the saw-cut model (30),
- wherein the analogue bearing body (70) has as least one non-circular, elliptical cross-sectional shape (73) for securing against twisting about its centre line (99) in the saw-cut model (30),
- wherein the analogue bearing body (70) has a recess (81), at least part of which has internal surfaces (84) for form-fitting mounting of the implant analogue (50), on which the implant analogue (50) can be secured in a position that is torsion-proof and precisely reproducible in a longitudinal direction (96),
- wherein the analogue bearing body (70), at least regions of which are elastic, is manufactured from a material having a modulus of elasticity between 1000 and 5000 N/mm²,
- wherein the analogue bearing body (70) has at least a first detent element (87) in the recess (81),
- wherein at least part of the implant analogue (50) has external surfaces (58) with which it can be brought into position bearing flat against the internal surfaces (84) of the analogue bearing body (70),
- wherein a least one second detent element (55) is arranged on the outside of the implant analogue (50), which detent element can be attached detachably to the first detent element (87) of the analogue bearing body (70).

2. Implant analogue and analogue bearing body according to at least one of the preceding claims, **characterized in that** the recess (81) is designed centrally and continuously.

3. Implant analogue and analogue bearing body according to at least one of the preceding claims, **characterized in that** as planar centring flanks the individual internal surfaces (84) each include a wedge angle of 3 to 7 angular degrees with respect to the centre line (99) of the analogue bearing body (70).

4. Implant analogue and analogue bearing body according to at least one of the preceding claims, **characterized in that** the analogue bearing body (70) has three internal surfaces (84) which are arranged about the circumference thereof equidistantly from each other.

5. Implant analogue and analogue bearing body according to at least one of the preceding claims, **characterized in that** the first detent element (87) is arranged in the central region of the recess (81) of the analogue bearing body (70).

6. Implant analogue and analogue bearing body according to at least one of the preceding claims, **characterized in that** from 0.5 mm below the first detent element (87) the cross section of the analogue bearing body (70) is reduced by more than 50 % over a length of less than one tenth of its total length, and/or it has marking ribs (79) there.

7. Implant analogue and analogue bearing body according to at least one of the preceding claims, **characterized in that** at least the radial outer surface (74) has a structure.

8. Implant analogue and analogue bearing body according to at least one of the preceding claims, **characterized in that** the implant analogue (50) inserted in the analogue bearing body (70) is locked with no play and with tension excess on the first detent element (87) with the second detent element (55), creating an axial tension in the longitudinal direction (96), by which the external surfaces (58) of the implant analogue (50) are brought to bear on the internal surfaces (84) of the analogue bearing body (70).

9. Implant analogue and analogue bearing body according to at least one of the preceding claims, **characterized in that** the implant analogue (50) is manufactured from a rust- and acid-resistant chromium-nickel steel having a sulfur content of at least 0.15 %.

## Revendications

1. Analogue d'implant (50) et corps de support d'analogue (70) destinés à être logés dans un modèle fractionné (30) pour la préparation d'une prothèse dentaire (1), l'analogue d'implant (50) étant insérable dans le corps de support d'analogue (70),
- le corps de support d'analogue (70) présentant soit une conformation extérieure en forme de tonneau dont les sections transversales se terminent par endroits sous forme elliptique ou dans une forme de coupe longitudinale (71) montrant un contour en tonneau de grande largeur, sur lequel se raccorde un segment tubulaire (77),
- le corps de support d'analogue (70) comportant des retenues arrière (76, 78) pour le blocage en position axiale dans le modèle fractionné (30),
- pour le blocage en rotation autour du modèle fractionné (30) autour de sa ligne médiane (99), le corps de support d'analogue (70) présentant au moins une forme de section transversale (73) non ronde, elliptique,
- le corps de support d'analogue (70) ayant un évidement (81) qui comporte au moins partiellement des surfaces intérieures (84), pour l'appui par complémentarité de forme de l'analogue d'implant (50) sur lesquelles l'analogue d'implant (50) est positionnable de manière solidaire en rotation et de manière répétable dans une direction longitudinale (96),
- le corps de support d'analogue (70) élastique au moins par endroits étant fabriqué en une matière dont le module d'élasticité se situe entre 1000 et 5000 N/mm²,
- le corps de support d'analogue (70) comportant dans l'évidement (81) au moins un premier élément d'enclenchement (87),
- l'analogue d'implant (50) comportant au moins partiellement des surfaces extérieures (58), par lesquelles il est susceptible d'être amené en appui à plat sur les surfaces intérieures (84) du corps de support d'analogue (70) et
- et à l'extérieur sur l'analogue d'implant (50) étant placé au moins un deuxième élément d'enclenchement (55) qui est enclenchable de manière amovible avec le premier élément d'enclenchement (87) du corps de support d'analogue (70).

2. Analogue d'implant et corps de support d'analogue selon au moins l'une quelconque des revendications précédentes, **caractérisés en ce que** l'évidement (81) est conçu de manière centrale et traversante.

3. Analogue d'implant et corps de support d'analogue selon au moins l'une quelconque des revendications précédentes, **caractérisés en ce qu'**en tant que flancs de centrage plans par rapport à la ligne médiane (99) du corps de support d'analogue (70), les surfaces intérieures (84) individuelles incluent chacune un angle de coin de 3 à 7 degrés d'angle.

4. Analogue d'implant et corps de support d'analogue selon au moins l'une quelconque des revendications précédentes, **caractérisés en ce que** le corps de support d'analogue (70) comporte trois surfaces intérieures (84) qui sont placées en étant divisées de manière équidistante dans la direction périphérique.

5. Analogue d'implant et corps de support d'analogue selon au moins l'une quelconque des revendications précédentes, **caractérisés en ce que** le premier élément d'enclenchement (87) est placé dans la zone centrale de l'évidement (81) du corps de support d'analogue (70).

6. Analogue d'implant et corps de support d'analogue selon au moins l'une quelconque des revendications précédentes, **caractérisés en ce qu'**à partir de 0,5 mm en-dessous du premier élément d'enclenchement (87), le corps de support d'analogue (70) réduit sa section transversale de plus de 50 % sur une longueur de moins d'un dixième de sa longueur totale et/ou y comporte des nervures de marquage (79).

7. Analogue d'implant et corps de support d'analogue selon au moins l'une quelconque des revendications précédentes, **caractérisés en ce qu'**au moins la surface extérieure (74) radiale comporte une structure.

8. Analogue d'implant et corps de support d'analogue selon au moins l'une quelconque des revendications précédentes, **caractérisés en ce que** l'analogue d'implant (50) inséré dans le corps de support d'analogue (70) est enclenché sans jeu, avec une réserve de serrage par le deuxième élément d'enclenchement (55) sur le premier élément d'enclenchement (87), en créant une traction axiale dans la direction longitudinale (96), par laquelle les surfaces extérieures (58) de l'analogue d'implants (50) viennent s'appuyer sur les surfaces intérieures (84) du corps de support d'analogue (70) .

9. Analogue d'implant et corps de support d'analogue selon au moins l'une quelconque des revendications précédentes, **caractérisés en ce que** l'analogue d'implant (50) est fabriqué en un acier nickel-chrome inoxydable résistant aux acides, qui comporte une part de soufre d'au moins 0,15 %.
